# EUROPÄISCHE PATENTANMELDUNG

(11) **EP 4 286 188 A1**
(43) Veröffentlichungstag der Anmeldung: **06.12.2023**
(21) Anmeldenummer: 23020136.0
(22) Anmeldetag: 17.03.2023
(51) Int. Cl.: B60K 1/00, B60K 11/02

(54) **KÜHLSYSTEM FÜR EINE ELEKTRISCHE TRAKTIONSMASCHINE FÜR EIN KRAFTFAHRZEUG**

(30) Priorität: 30.05.2022 DE 102022113569
(71) Anmelder: Dr. Ing. h.c. F. Porsche Aktiengesellschaft, 70435 Stuttgart (DE)
(72) Erfinder: Oechslen, Stefan, 70176 Stuttgart (DE); Kübler, Simon, 74199 Untergruppenbach Unterheinriet (DE)

(57) **Zusammenfassung**

Die Erfindung betrifft ein Kühlsystem (1) für eine elektrische Traktionsmaschine (2) für ein Kraftfahrzeug (3), aufweisend zumindest die folgenden Komponenten:
- ein Kreisleitungssystem (4) zum Leiten von einer umzuwälzenden ersten Kühlflüssigkeit (5);
- eine Umwälzpumpe (6) zum Fördern von der ersten Kühlflüssigkeit (5) in dem Kreisleitungssystem (4) in einer ersten Umwälzrichtung (7);
- einen Ausgleichsbehälter (8), welcher mindestens teilweise mit der im Kreisleitungssystem (4) umzuwälzenden ersten Kühlflüssigkeit (5) und mindestens teilweise mit einem Gas (9) gefüllt ist;
- einen Motoreingangsanschluss (10) zum eingangsseitigen fluidischen Verbinden des Kreisleitungssystems (4) mit einer zu temperierenden elektrischen Traktionsmaschine (2);
- einen Motorausgangsanschluss (11) zum ausgangsseitigen fluidischen Verbinden des Kreisleitungssystems (4) mit der zu temperierenden elektrischen Traktionsmaschine (2); und
- einen ersten Wärmetauscher (12) zum Wärme Abführen aus der und/oder Zuführen in die in dem Kreisleitungssystem (4) umzuwälzende erste Kühlflüssigkeit (5). Das Kühlsystem (1) ist vor allem dadurch gekennzeichnet, dass der Ausgleichsbehälter (8) mit einer Öffnung (13) zu der Umgebung (14) offen ausgeführt ist.

Mit dem hier vorgeschlagenen Ausgleichsbehälter und Kühlsystem ist eine effiziente Entlüftung der Kühlflüssigkeit darstellbar.

## Beschreibung

Die Erfindung betrifft ein Kühlsystem für eine elektrische Traktionsmaschine für ein Kraftfahrzeug, ein Thermo-Management-Modul mit einem solchen Kühlsystem für einen Antriebsstrang eines Kraftfahrzeugs, einen Antriebsstrang mit einem solchen Thermo-Management-Modul für ein Kraftfahrzeug, sowie ein Kraftfahrzeug mit einem solchen Antriebsstrang.

Aus dem Stand der Technik sind Kühlsysteme für elektrische Traktionsmaschinen bekannt, um die entstehende Abwärme bei einer Leistungsabfrage abzuführen. Für eine gesteigerte Kühlleistung ist die Idee, zumindest den Stator einer elektrischen Traktionsmaschine mit einem Kühlmittel unmittelbar zu durchströmen, wobei dafür das Kühlmittel als dielektrische Kühlflüssigkeit auszuführen ist. Es ist sinnvoll, möglichst wenige Komponenten in diesem Dielektrikum-Kühlsystem zu kühlen. Andere Komponenten eines Antriebsstrangs, in welchen eine solche elektrische Traktionsmaschine eingebunden ist, wie beispielsweise ein Getriebe und ein Puls-Wechsel-Richter, werden bevorzugt in zumindest einem davon getrennten Kühlkreislauf gekühlt. Ein Getriebe ist beispielsweise mittels eines Ölkreislaufs gekühlt, sodass das Kühlmittel (Öl) zugleich zum Schmieren der Getriebekomponenten eingerichtet ist. Ein Puls-Wechsel-Richter ist beispielsweise in einem Wasserkreislauf angeordnet, mit welchem bevorzugt noch weitere Fahrzeugkomponenten kühlbar sind.

Aufgrund von unvermeidbaren Temperaturschwankungen in der Kühlflüssigkeit kommt es zu Volumenänderungen der Kühlflüssigkeit und folglich zu Druckschwankungen, welche mitunter zu unzulässig hohen beziehungsweise zu geringen Betriebsdrücken führen. Dafür ist ein Ausgleichsbehälter vorgesehen, in welchem die Kühlflüssigkeit gegenüber einem (leicht kompressiblen) Gas eine Volumenänderung bei geringer Druckänderung durchführen kann. Hierfür ist es notwendig, dass in dem Schwerefeld der Erde das (leichtere) Gas stets oberhalb der (schwereren) Kühlflüssigkeit angeordnet ist.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein Kühlsystem für eine elektrische Traktionsmaschine für ein Kraftfahrzeug, aufweisend zumindest die folgenden Komponenten:
- ein Kreisleitungssystem zum Leiten von einer umzuwälzenden ersten Kühlflüssigkeit;
- eine Umwälzpumpe zum Fördern von der ersten Kühlflüssigkeit in dem Kreisleitungssystem in einer ersten Umwälzrichtung;
- einen Ausgleichsbehälter, welcher mindestens teilweise mit der im Kreisleitungssystem umzuwälzenden ersten Kühlflüssigkeit und mindestens teilweise mit einem Gas gefüllt ist;
- einen Motoreingangsanschluss zum eingangsseitigen fluidischen Verbinden des Kreisleitungssystems mit einer zu temperierenden elektrischen Traktionsmaschine;
- einen Motorausgangsanschluss zum ausgangsseitigen fluidischen Verbinden des Kreisleitungssystems mit der zu temperierenden elektrischen Traktionsmaschine; und
- einen ersten Wärmetauscher zum Wärme Abführen aus der und/oder Zuführen in die in dem Kreisleitungssystem umzuwälzende erste Kühlflüssigkeit.

Das Kühlsystem ist vor allem dadurch gekennzeichnet, dass der Ausgleichsbehälter mit einer Öffnung zu der Umgebung offen ausgeführt ist.

In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Es besteht das Problem, dass in dem Kühlsystem beziehungsweise dem Kreisleitungssystem infolge von Temperaturschwankungen unzulässig hohe Drücke beziehungsweise zu geringe Drücke auftreten können. Daher ist ein Ausgleich wie oben beschrieben mittels eines Ausgleichsbehälters vorteilhaft. Hier ist vorgeschlagen, für eine besonders hohe Volumenschwankung das System zur Umgebung offen zu gestalten.

Vorab sei darauf hingewiesen, dass mit dem hier vorgeschlagenen Kühlsystem in erster Linie Abwärme abzuführen ist, aber auch ein Anheben der Temperatur von mittels des Kühlsystems temperierten Komponenten ein möglicher Betriebszustand ist, beispielsweise bei winterlichen Temperaturen, sodass die Komponenten schnell auf Betriebstemperatur gebracht werden. Bei den meisten Anwendungen ist aber auch bei winterlichen Temperaturen im Betrieb einer elektrischen Traktionsmaschine eines Kraftfahrzeugs Abwärme abzuführen, also eine Kühlung das Ziel.

Es sei weiterhin darauf hingewiesen, dass für die Übersichtlichkeit mit später erläuterten Komponenten und Eigenschaften gleichnamige Komponenten beziehungsweise Eigenschaften des Kühlsystems jeweils als erste Komponente beziehungsweise Eigenschaft bezeichnet sind, wobei dies in einem eindeutigen Kontext nicht immer aufgegriffen wird.

Das Kühlsystem umfasst ein Kreisleitungssystem, welches eine Mehrzahl von Leitungen und/oder Leitungsabschnitten zwischen den Komponenten des Kühlsystems umfasst. Innerhalb des Kreisleitungssystems ist die erste Kühlflüssigkeit vor einer Umgebung abgekapselt und somit tritt dort ein Verlust von gasförmigen Anteilen höchstens in vernachlässigbarer Menge (beispielsweise infolge von Undichtigkeiten) auf. Zum Umwälzen der ersten Kühlflüssigkeit ist eine (erste) Umwälzpumpe vorgesehen. Von der Umwälzpumpe wird ein Druckgefälle mit der Folge einer (ersten) Umwälzrichtung in dem Kreisleitungssystem erzeugt. In einer Ausführungsform ist die Umwälzpumpe umkehrbar betreibbar, aber die erste Umwälzrichtung ist die Hauptbetriebsrichtung, zumindest beim Abführen von Abwärme aus der eingebundenen elektrischen Traktionsmaschine. Ein Umkehren der Richtung ist beispielsweise mittels Umkehr der Drehrichtung eines Pumpenrads, bevorzugt aber mittels eines entsprechenden Wege-Ventils, einstellbar.

Der Ausgleichsbehälter ist zum Volumenausgleich zwischen dem Kreisleitungssystem mit einer ersten Kühlflüssigkeit und einem (leicht kompressiblen) Gas, beispielsweise Luft aus einer Umgebung, eingerichtet, um zu vermeiden, dass in Abhängigkeit von Temperaturänderungen und daraus resultierenden Volumenänderungen der ersten Kühlflüssigkeit in dem Kreisleitungssystem eine vorbestimmte Druckgrenze überschritten wird. Der Ausgleichsbehälter ist in einer Ausführungsform geschlossen ausgeführt, wobei ein Gas in dem Ausgleichsbehälter komprimiert wird und die daraus folgende Druckzunahme innerhalb eines auslegungsgemäßen Betriebszustands in dem Kreisleitungssystem einen vorbestimmten Druckgrenzwert nicht überschreitet. Alternativ ist der Ausgleichsbehälter offen ausgeführt, wobei ein Gas aus einer (unmittelbaren) Umgebung (bevorzugt Luft) bei einer Volumenzunahme aus dem Ausgleichsbehälter abgelassen und bei einer Volumenabnahme eingesaugt wird. In einer Ausführungsform ist ein halboffener Ausgleichsbehälter vorgesehen, bei welchem nach Art des offenen Ausgleichsbehälters ein Gas abgeführt und zugeführt wird, wobei aber dies nicht aus einer offenen Umgebung geschieht, sondern aus einem angeschlossenen Behälter, bevorzugt mit einem veränderlichen Volumen, beispielsweise mithilfe eines Faltenbalgs oder ähnlichem.

Optional ist eine weitere Aufgabe des Ausgleichsbehälters, dass hier Gaseinschlüsse in der ersten Kühlflüssigkeit infolge eines zu dem Gas vorliegenden Druckgefälles abscheidbar sind, welche an die Umgebung abgeführt oder einem eingeschlossenen Gas zugeführt werden.

Eine elektrische Traktionsmaschine ist zum Temperieren eingebunden in das Kühlsystem, indem sie über einen Motoreingangsanschluss mit der ersten Kühlflüssigkeit versorgt wird und über einen Motorausgangsanschluss die eingebrachte erste Kühlflüssigkeit wieder aus der elektrischen Traktionsmaschine abgeführt wird. Es sei darauf hingewiesen, dass bei einer Umkehr der (ersten) Umwälzrichtung von dem Motoreingangsanschluss ein Ausgang und von dem Motorausgangsanschluss ein Eingang gebildet ist. Bevorzugt bleibt aber auch dann die Flussrichtung über die elektrische Traktionsmaschine gleich, also der Motoreingangsanschluss ein Eingang und der Motorausgangsanschluss ein Ausgang für die erste Kühlflüssigkeit, wobei dies beispielsweise mittels entsprechender Leitungsführung und/oder zumindest ein schaltbares Wege-Ventil bewerkstelligt ist.

Der (erste) Wärmetauscher ist zum Übertragen von Wärme zwischen zwei Fluiden, also der ersten Kühlflüssigkeit und einem weiteren Fluid (beispielsweise Wasser oder Umgebungsluft), eingerichtet. Bei einer Ausführungsform zum gegen Luft Kühlen ist beispielsweise ein Ventilator umfasst.

In einer vorteilhaften Ausführungsform ist der Leitungsabstand zwischen dem Ausgleichsbehälter und dem Wärmetauscher in dem Kreisleitungssystem möglichst kurz, sodass ein Wärmeeintrag bis zum Erreichen des Ausgleichsbehälters gering ist. Aus gleichem Grund ist alternativ oder zusätzlich ein Leitungsabschnitt zwischen dem Ausgleichsbehälter und dem Wärmetauscher in dem Kreisleitungssystem wärmeisoliert und/oder von anderen Wärmequellen, besonders von der zu temperierenden elektrischen Traktionsmaschine, möglichst weit beabstandet.

Es wird weiterhin in einer vorteilhaften Ausführungsform des Kühlsystems vorgeschlagen, dass von der Öffnung zu der Umgebung des Ausgleichsbehälters zum Filtern von passierender Luft ein Adsorptionsfilter umfasst ist,
wobei der Adsorptionsfilter ein Trockenmittel und/oder Aktivkohle umfasst.

Hier ist vorgeschlagen, einen Adsorptionsfilter vorzusehen, welcher von einem Ausgang umfasst ist, um damit beispielsweise Kohlenwasserstoff-Verbindungen zurückzuhalten, wobei hierfür beispielsweise ein Aktivkohlefilter geeignet ist. In einer vorteilhaften Ausführungsform ist zudem ein Trockenmittel, beispielsweise ein Granulat, vorgesehen, um den Austritt von Feuchtigkeit an die Umgebung auszuschließen. In einer vorteilhaften Ausführungsform ist der gleiche Adsorptionsfilter zudem von dem Eingang des Ausgleichsbehälters umfasst, um somit das Eintreten von unerwünschten Bestandteilen in den Ausgleichsraum des Ausgleichsbehälters zu verhindern.

Es wird weiterhin in einer vorteilhaften Ausführungsform des Kühlsystems vorgeschlagen, dass die Öffnung des Ausgleichsbehälters über eine Beruhigungsstrecke mit der Umgebung kommunizierend verbunden ist,
wobei bevorzugt mittels der Beruhigungsstrecke über ein Beruhigungslabyrinth Flüssigkeit aus einem die Beruhigungsstrecke passierenden Gasstrom abscheidbar ist, und/oder
wobei bevorzugt mittels der Beruhigungsstrecke ein im Vergleich zu dem Druck in der Öffnung des Ausgleichsbehälters erhöhter Druck in einem die Beruhigungsstrecke passierenden Gasstrom erzeugbar ist.

Hier ist vorgeschlagen, dass die zur Umgebung gerichtete Öffnung des Ausgleichsbehälters bevorzugt einzig mittels einer Beruhigungsstrecke mit der Umgebung kommunizierend verbunden ist. Eine Beruhigungsstrecke hat den Vorteil, dass aufgrund einer Verlangsamung der Strömung sich weiterhin Flüssigkeitsanteile absetzen können, welche bevorzugt wieder eingesammelt und rückgeführt werden oder separat (sofern es sich eher um von außen eingedrungene Flüssigkeit, wie beispielsweise Kondenswasser handelt) nach außen, beispielsweise durch abtropfen lassen, abgeführt werden.

In einer vorteilhaften Ausführungsform umfasst die Beruhigungsstrecke ein Beruhigungslabyrinth, mit welchem Flüssigkeit, besonders bevorzugt Luftfeuchtigkeit aus einströmender Luft aus der Umgebung mittels Kondensation abscheidbar ist. Bei der gleichen oder einer alternativen Ausführungsform ist mittels der Beruhigungsstrecke von innen ausweichende Kühlflüssigkeit (gegebenenfalls auch als Form von in dem ausströmenden Gas gelösten oder mitgetragenen Tröpfchen) mittels des Beruhigungslabyrinth abscheidbar.

In einer vorteilhaften Ausführungsform ist in der Beruhigungsstrecke ein Druck erhöht im Vergleich zu dem Druck in der Öffnung des Ausgleichsbehälters. Damit wird beispielsweise die Lösungsfähigkeit des Gases für eine Flüssigkeit beziehungsweise Feuchtigkeit erhöht im Vergleich zu dem Gas im Bereich der Öffnung des Ausgleichsbehälters und damit ist ein Eindringen von Feuchtigkeit in dem Bereich der Öffnung reduziert. Vor allem aber ist mittels eines höheren Drucks in der Beruhigungsstrecke im Vergleich zu der Öffnung ein zusätzlicher Puffer für eine Druckerhöhung in dem Ausgleichsbehälter und damit in dem Kreisleitungssystem erzielbar, ohne dass hierbei zwangsläufig ein Austausch mit der Umgebung stattfinden muss. Damit wird ein Eindringen von Schmutz und Flüssigkeit von außen beziehungsweise ein Ausdringen von Kohlenwasserstoff-Verbindungen von innen auf weniger Zustände reduziert und gegebenenfalls ein vorhandener Adsorptionsfilter seltener eingesetzt und damit geschont für eine längere Lebensdauer und/oder eine kleinere Auslegung für eine bessere Wirtschaftlichkeit.

Es wird weiterhin in einer vorteilhaften Ausführungsform des Kühlsystems vorgeschlagen, dass mittels zumindest eines Ventils die Öffnung des Ausgleichsbehälters zur Umgebung verschließbar ist,
wobei bevorzugt das zumindest eine Ventil normal geschlossen ist, und besonders bevorzugt druckgesteuert öffenbar ist, und/oder
wobei bevorzugt zumindest eines der Ventile, besonders bevorzugt auf einen Druckgrenzwert und/oder einen Temperaturgrenzwert hin, schaltbar verschließbar ist.

Hier ist vorgeschlagen, zumindest ein Ventil vorzusehen, womit der Ausgleichsbehälter zur Umgebung verschließbar ist, sodass insgesamt oder wahlweise eine eingehende oder ausgehende Verbindung zur Umgebung verschließbar ist. Wenn eine Strömung in die Umgebung hinaus beziehungsweise aus der Umgebung herein verhindert wird, indem von einem Ventil lediglich bei einem vorbestimmten Grenzdruck geöffnet wird, wird der Adsorptionsfilter über die Lebenszeit weniger belastet und kann somit insgesamt geringer dimensioniert werden. Auch ist der Eintrag von Feuchtigkeit beziehungsweise der Austrag von Kohlenwasserstoff-Verbindungen reduziert. Bevorzugt ist dafür ein Ventilkörper zwischen der Umgebung und dem Adsorptionsfilter vorgesehen. Alternativ ist der Adsorptionsfilter umgebungsseitig zu dem Ventil angeordnet, weil auch hier ein Durchströmen des Adsorptionsfilters bei geschlossenem Ventil nur noch in vernachlässigbaren Mengen auftritt. Eine solche Variante ist bevorzugt mit einem zusätzlichen Schutz gegen Schmutz und gegebenenfalls Spritzwasser ausgestattet, sodass der Adsorptionsfilter vor Verschmutzung geschützt ist und zugleich das Ventil sich in einem mittels des Adsorptionsfilters geschützten Bereichs befindet, in dem wenig, bis keine Flüssigkeit vorliegt. Bei der umgekehrten Ausführungsform ist das Ventil selbst robust ausgeführt oder ebenfalls mittels eines zusätzlichen Schutzes wie oben beschrieben vor Verschmutzung und gegebenenfalls Spritzwasser geschützt.

Bei einer bevorzugten Ausführungsform, bei welcher das normal geschlossene Ventil druckgesteuert öffenbar ist, ist beispielsweise eine Feder für ein passives Öffnen vorgesehen, sodass der Ventilkörper bei Überschreiten der Federkraft infolge des anliegenden Drucks geöffnet und bei Abfallen des Drucks unterhalb der Federkraft wieder geschlossen wird.

Bei einer Ausführungsform ist zusätzlich oder alternativ ein Ventil vorgesehen, welches schaltbar verschließbar ist, also beispielsweise mittels elektronischer Steuerung geöffnet und verschlossen wird. Hierzu ist entsprechend ein Drucksensor und/oder ein Temperatursensor vorgesehen, welche ein Öffnen des Ventils gemäß eines entsprechenden Regelkreises bewirken. Mittels des Ventils ist bei geeigneter Auslegung erzielt, dass innerhalb des Kreisleitungssystems zwar eine Druckschwankung auftritt, jedoch nur innerhalb von gewünschten Grenzen (nämlich den jeweiligen Druckgrenzwerten und/oder Temperaturgrenzwerten) und erst bei Überschreiten eines entsprechenden Grenzwerts ein Austausch mit der Umgebung stattfindet, sodass der Adsorptionsfilter deutlich seltener in einem Betrieb belastet werden und somit die Lebensdauer des Systems erhöht wird beziehungsweise die Kosten für ein solches System aufgrund der geringeren Belastung reduzierbar sind.

Es wird weiterhin in einer vorteilhaften Ausführungsform des Kühlsystems vorgeschlagen, dass die Öffnung des Ausgleichsbehälters über einen Eingang und einen Ausgang mit der Umgebung kommunizierend verbunden ist,
wobei der Ausgang zum Filtern von Luft einzig über eine semipermeable Membran mit der Umgebung in gasdurchlässiger und in Schmutz und/oder Flüssigkeit abweisender Verbindung steht.

Hier ist nun vorgeschlagen, dass der Ausgleichsbehälter zur Umgebung offen ist, wobei eine semipermeable Membran in dem Ausgang vorgesehen ist. Die semipermeable Membran sorgt dafür, dass Kohlenwasserstoff-Verbindungen an einem Austreten gehindert werden, sodass keine oder einzig eine vernachlässigbare Menge austritt.

Es sei darauf hingewiesen, dass die Semipermeabilität hier unter technischen Gesichtspunkten beschrieben ist, also hinsichtlich einer ausreichenden Funktionalität und unter dem Aspekt der Wirtschaftlichkeit, sodass durchaus Leckagen auftreten können. Nicht berücksichtigt ist hierbei ebenfalls, dass bei einer basischen oder sauren Flüssigkeit an der Membran ein Schaden entstehen kann, wodurch die abweisende Funktion beeinträchtigt wird. Beispielsweise ist hierbei ein weiterer Schutz für die Membran vorgesehen, sodass Spritzwasser, vor allem bei auf Straßen verwendetem Salz gegen Glätte im Winter, von einem Auftreffen auf der Membran beziehungsweise übermäßigen Auftreffen auf der Membran abgehalten wird. Hierzu ist beispielsweise ein Labyrinth und/oder eine Kanalverengung ausreichend, weil die Volumenströme für die Betriebszustände in den meisten Fällen gering sind. Eine geeignete Membran ist beispielsweise ein poröses Textil, bevorzugt mit einer hydrophoben Oberfläche (beispielsweise mittels entsprechender Beschichtung).

Gemäß einem weiteren Aspekt wird ein Kühlsystem vorgeschlagen, aufweisend einen Ausgleichsbehälter mit zumindest den folgenden Komponenten:
- zumindest einen Eintritt für eine erste Kühlflüssigkeit;
- einen ersten Austritt für die erste Kühlflüssigkeit;
- einen zweiten Austritt für ein Gas; und
- einen Verbindungskanal zwischen dem zumindest einen Eintritt und den Austritten,

wobei der Verbindungskanal ausgehend von dem zumindest einen Eintritt hin zu dem ersten Austritt für die erste Kühlflüssigkeit sich aufweitend gebildet ist,
wobei einer der Eintritte für die erste Kühlflüssigkeit und der zweite Austritt für ein Gas in der Einbausituation in jedem Betriebszustand mittels eines horizontalen und/oder vertikalen Versatzes oberhalb des ersten Austritts für die erste Kühlflüssigkeit angeordnet ist.

Hier ist ein Ausgleichsbehälter vorgeschlagen, bei welchem aufgrund eines horizontalen Versatzes in der entsprechenden Einbausituation in jedem Betriebszustand sichergestellt ist, dass der Eintritt für die erste Kühlflüssigkeit stets oberhalb des ersten Austritts für die erste Kühlflüssigkeit angeordnet ist. In einer Anwendung in einem Kraftfahrzeug unterliegt ein solcher Ausgleichsbehälter starken Beschleunigungen vor allem in Querrichtung und in Längsrichtung des Kraftfahrzeugs, also in den Richtungen quer zu dem Schwerefeld der Erde.

Der Ausgleichsbehälter umfasst einen Eintritt für die erste Kühlflüssigkeit, welche beispielsweise in einem Kühlsystem nach einem Umlauf in den Ausgleichsbehälter eintritt. In einer Anwendung ist der Eintritt einer elektrischen Traktionsmaschine unmittelbar nachgeschaltet angeordnet. Weiterhin ist ein erster Austritt vorgesehen, über den die erste Kühlflüssigkeit weiter in dem Kühlsystem beziehungsweise dem Kreisleitungssystem umgewälzt wird. Der erste Austritt ist beispielsweise unmittelbar an einer Umwälzpumpe vorgeschaltet. Über den ersten Austritt tritt die erste Kühlflüssigkeit, möglichst von Gaseinschlüssen getrennt, zur weiteren Förderung in das Kreisleitungssystem ein. Weiterhin ist ein zweiter Austritt vorgesehen, über welchen Gas austreten kann, welches aus der Kühlflüssigkeit separiert wird oder aufgrund einer Volumenzunahme der Kühlflüssigkeit (beispielsweise temperaturbedingt) verdrängt wird. Es sei darauf hingewiesen, dass der zweite Austritt in einer bevorzugten Ausführungsform zudem ein Einlass für ein Gas ist, sofern das Volumen der ersten Kühlflüssigkeit abnimmt und zum Vermeiden des Entstehens eines übermäßigen Unterdrucks Gas von außerhalb angesaugt wird. Es sei aber auch darauf hingewiesen, dass der Austritt nicht zwangsläufig zu einer freien Umgebung gerichtet ist, sondern auch in einer Ausführungsform zu einer weiteren Kammer führend angebunden ist und hierbei mittels der guten Kompressibilität und eines entsprechenden Volumens des Gases ein übermäßiger Druckanstieg beziehungsweise Druckabfall in der ersten Kühlflüssigkeit beziehungsweise in dem Kreisleitungssystem unterbunden wird.

Zwischen dem Eintritt und den Austritten ist ein Verbindungskanal vorgesehen. Der Verbindungskanal ist sich aufweitend gebildet, sodass hier, unter der Annahme einer konstanten Fördergeschwindigkeit der ersten Kühlflüssigkeit, ein Fördervolumenstrom der ersten Kühlflüssigkeit eine abnehmende Strömungsgeschwindigkeit einstellt und somit ein Auslösen von eingeschlossenem Gas in der Kühlflüssigkeit begünstigt wird. Alternativ oder gleichzeitig tritt aufgrund der Aufweitung des Verbindungskanals hin zu dem ersten Austritt eine Druckabnahme auf, welche zudem ein Auslösen von Gas in der ersten Kühlflüssigkeit befördert. Es sei darauf hingewiesen, dass bevorzugt eine Verbindung zwischen dem ersten Austritt und dem zweiten Austritt (für Gas) sich hin zu dem zweiten Austritt verjüngend gebildet ist, sodass hier wiederum durch eine Beschleunigung und/oder Druckerhöhung in dem Gas in den entsprechenden Betriebszuständen ein Ausströmen des Gases und ein minimaler Druck an einer Grenzfläche zwischen der Kühlflüssigkeit und dem Gas sichergestellt ist.

Hier ist nun ein Versatz vorgesehen, welcher in der Einbausituation horizontal verläuft, wobei bevorzugt der Versatz etwa den gleichen horizontalen Abstand zu dem Extremum der horizontalen Erstreckung des Verbindungskanals aufweist wie der vertikale Abstand. Dadurch ist sichergestellt, dass von diesem Eintritt für die erste Kühlflüssigkeit stets der höchste Punkt gebildet ist, auch wenn aufgrund einer Überlagerung der Erdbeschleunigung durch die Fahrzeugbeschleunigung eine von der Geometrie abweichende Gesamtbeschleunigung vorliegt. Damit ist eine Entgasungsstrecke innerhalb des Ausgleichsbehälters maximiert und damit der Ausgleichsbehälter besonders effizient zum Vermeiden von Gaseinschlüssen in der ersten Kühlflüssigkeit.

In einer vorteilhaften Ausführungsform ist ein zweiter Eintritt für die erste Kühlflüssigkeit vorgesehen, wobei dieser sich bevorzugt unterhalb des Flüssigkeitsspiegels befindet, wenn sich der Ausgleichsbehälter im Betrieb in einem Kühlsystem befindet. Beispielsweise ist der zweite Eintritt etwa in der gleichen Höhe wie der erste Austritt für die erste Kühlflüssigkeit angeordnet. In einer bevorzugten Ausführungsform wird dann sowohl über den ersten Eintritt (wie oben beschrieben) und dem zweiten Eintritt die erste Kühlflüssigkeit dem Ausgleichsbehälter zugeführt, sodass die Entgasungsstrecke für die erste Kühlflüssigkeit, welche über den zweiten Eintritt in den Ausgleichsbehälter eintritt, deutlich verkürzt ist, aber damit sicher verhindert ist, dass in einem Betriebszustand die Umwälzpumpe gasförmige Bestandteile in größerer Menge anzieht (ein sogenanntes Luftziehen vermieden ist).

Hier ist vorgeschlagen, dass der zuvor beschriebene Ausgleichsbehälter in dem Kühlsystem eingesetzt ist. Es sei darauf hingewiesen, dass der hier beschriebene Ausgang, in welchem eine semipermeable Membran und/oder ein Adsorptionsfilter vorgesehen ist, nicht gleichbedeutend ist mit dem zweiten Austritt für Gas, sondern gegebenenfalls eine weitere Kammer nachgeschaltet ist, in welcher unter Umständen eine solche Membran angeordnet ist und mittels welcher ein Eingang und/oder Ausgang gebildet ist und mit dem zweiten Austritt des Ausgleichsbehälters verbunden ist und gemäß der obigen Definition in dem Kühlsystem gemeinsam mit dem eingangs beschriebenen Ausgleichsbehälter ein Gesamtsystem gebildet ist, welches im Zusammenhang mit dem Kühlsystem als Ausgleichsbehälter bezeichnet wird. In einer anderen Ausführungsform sind der Eingang und der Ausgang, wie sie zuvor beschrieben sind, von dem zweiten Austritt umfasst beziehungsweise dem Austritt vorgeschaltet innerhalb des Ausgleichsbehälters angeordnet.

Es wird weiterhin in einer vorteilhaften Ausführungsform des Kühlsystems vorgeschlagen, dass die Wandungen des Ausgleichsbehälters gebildet sind von:
- einem ersten Behälter-Teil, welches den Eintritt für die erste Kühlflüssigkeit umfasst;
- einem zweiten Behälter-Teil, welches die Austritte umfasst; und
- einem dritten Behälter-Teil, von welchem eine Trennwand zwischen dem ersten Behälter-Teil und dem zweiten Behälter-Teil gebildet ist,
wobei der Eintritt und der zweite Austritt einzig über eine längste Erstreckung des Ausgleichsbehälters miteinander kommunizierend verbunden sind.

Der hier vorgeschlagene Ausgleichsbehälter ist besonders einfach montierbar und kostengünstig herstellbar, indem drei Behälter-Teile vorgesehen sind, wobei bevorzugt der erste Behälter-Teil und der zweite Behälter-Teil eine Außenwandung bilden und der dritte Behälter-Teil einzig eine innere Trennwand zwischen den beiden anderen Behälter-Teilen bildet. In einer Ausführungsform sind zumindest der erste Behälter-Teil und der zweite Behälter-Teil miteinander stoffschlüssig verbunden, beispielsweise mittels Schweißen oder Löten beziehungsweise Hartlöten. Der dritte Behälter-Teil (Trennwand) ist in einer Ausführungsform lediglich eingelegt, bevorzugt ebenfalls beispielsweise stoffschlüssig flüssigkeitsdicht und bevorzugt gasdicht mit zumindest einem der anderen Behälter-Teile verbunden.

Es sei darauf hingewiesen, dass das Anordnen von den Eintritten und den Austritten an jeweils dem ersten Behälter-Teil beziehungsweise dem zweiten Behälter-Teil nicht zwangsläufig bedeutet, dass der Verbindungskanal von dem Eintritt bis zu einem Übergang hin zu dem Austritt einzig in dem ersten Behälter-Teil beziehungsweise entlang des dritten Behälter-Teils verläuft, sondern gegebenenfalls von dem zweiten Behälter-Teil der Verbindungskanal von Anfang an zumindest zu einer Seite hin eine Wandung bildet. In einer bevorzugten Ausführungsform ist einzig über den ersten Behälter-Teil und/oder über den zweiten Behälter-Teil eine Montierbarkeit geschaffen. Mittels der Trennwand ist eine Kontaktierung des Ausgleichsbehälters geschaffen, wobei zwei zueinander parallele Kanalabschnitte des Verbindungskanals geschaffen sind. In einer vorteilhaften Ausführungsform sind zudem von der Trennwand in einer weiteren räumlichen Ausrichtung zwei zueinander parallele Kanalabschnitte des Verbindungskanals geschaffen. Beispielsweise weist hierzu das dritte Behälter-Teil eine L-Form auf, wobei bevorzugt weiterhin von einem der L-förmigen Wände ein Abschnitt, wiederum L-förmig abgeknickt ist, sodass hierdurch insgesamt drei Abschnitte entstehen, die innerhalb einer geringen räumlichen Ausdehnung zueinander parallele Kanalabschnitte bilden.

Es sei darauf hingewiesen, dass die längste Erstreckung des Ausgleichsbehälters sich auf die Form des Ausgleichsbehälters bezieht, wobei hier die Ausdehnung des Verbindungskanals gemeint ist. Bei einem dünnwandigen Ausgleichsbehälter, beispielsweise aus Blech geformten Ausgleichsbehälter (beispielsweise über Tiefziehen), entspricht die Form des Verbindungskanals der Außenform des Ausgleichsbehälters und somit entspricht die längste Erstreckung des Ausgleichsbehälters etwa der Außenform des Ausgleichsbehälters etwa der längsten Erstreckung des Verbindungskanals. Die Trennwand, welche von dem dritten Behälter-Teil gebildet ist, sorgt dabei für eine Vermehrfachung der Strecke des Verbindungskanals im Vergleich zu der längsten Erstreckung des Ausgleichsbehälters.

Es wird weiterhin in einer vorteilhaften Ausführungsform des Kühlsystems vorgeschlagen, dass in dem Verbindungskanal zwischen dem ersten Austritt für die erste Kühlflüssigkeit und dem zweiten Austritt für ein Gas ein Labyrinth zum Zurückhalten von Flüssigkeit gebildet ist.

Das hier vorgeschlagene Labyrinth zeichnet sich vor allem dadurch aus, dass kein in gerader Verbindung zwischen eine Mehrzahl von Durchlässen in dem Labyrinth und/oder hin zu dem zweiten Austritt für Gas gebildet ist, sodass eventuell (beispielsweise durch eine Schwapp-Bewegung) hin zu dem zweiten Austritt strömende erste Kühlflüssigkeit von dem Labyrinth zu einem Großteil zurückgehalten wird und bevorzugt zudem vom Gas mitgerissene Kühlflüssigkeit an einer entsprechenden Wandung des Labyrinths anhaftet und somit daran gehindert wird, hin zu dem zweiten Austritt für Gas zu fließen. In einer besonders bevorzugten Ausführungsform ist das Labyrinth zudem derart ausgeführt, dass von außen über den Austritt eintretende Flüssigkeit, beispielsweise Spritzwasser oder erhöhte Luftfeuchtigkeit aus der Luft aus der Umgebung von der Wandung des Labyrinths zurückgehalten wird und nicht beziehungsweise nur in einer vernachlässigbaren Menge in die erste Kühlflüssigkeit beigemischt wird. Dies ist insbesondere dann wichtig, wenn der zweite Austritt zur Umgebung offen ist und zugleich die erste Kühlflüssigkeit eine dielektrische Kühlflüssigkeit ist, und somit der Wirkungsgrad der elektrischen Isolierung mit dem Eintritt von Wasser reduziert wird.

Gemäß einem weiteren Aspekt wird ein Thermo-Management-Modul für einen Antriebsstrang eines Kraftfahrzeugs vorgeschlagen, aufweisend zumindest die folgenden Komponenten:
- für ein Getriebe, einen Ölkreislauf mit einer zweiten Umwälzrichtung und mit einem zweiten Wärmetauscher;
- für zumindest eine Fahrzeugkomponente, einen Wasserkreislauf mit einer dritten Umwälzrichtung und mit einem dritten Wärmetauscher; und
- für eine elektrische Traktionsmaschine, ein Kühlsystem nach einer Ausführungsform gemäß der obigen Beschreibung,
wobei bevorzugt ein Puls-Wechsel-Richter für die elektrische Traktionsmaschine in dem Wasserkreislauf angeordnet ist.

Hier ist das zuvor beschriebene Kühlsystem in ein Thermo-Management-Modul für einen Antriebsstrang eines Kraftfahrzeugs eingebunden, wobei dieses Thermo-Management-Modul [TMM] hinsichtlich seiner Funktionen und Aufgaben allgemein bekannt ist. Neben Komponenten eines Antriebsstrangs werden bevorzugt auch andere Fahrzeugkomponenten temperiert, beispielsweise eine (bevorzugt Traktions-) Batterie.

Andere Komponenten eines Antriebsstrangs, in welchen eine solche elektrische Traktionsmaschine eingebunden ist, wie beispielsweise ein Getriebe und ein Puls-Wechsel-Richter werden bevorzugt in zumindest einem von dem ersten Kühlsystem getrennten Kühlkreislauf gekühlt. Ein Getriebe, beispielsweise umfassend ein (bevorzugt schaltbares) Übersetzungsgetriebe und/oder ein Differential, ist mittels eines Ölkreislaufs mit einem Öl, bevorzugt direkt, gekühlt. Eine direkte Kühlung ist eine Komponente des Getriebes (beispielsweise Zahnräder) unmittelbar kontaktierende Durchströmung, beispielsweise als Ersatz für ein Schmiermittel. Der Ölkreislauf ist beispielsweise konventionell ausgeführt. In einer vorteilhaften Ausführungsform ist eine zweite Umwälzpumpe zum Erzeugen einer zweiten Umwälzrichtung in dem Ölkreislauf mit der ersten Umwälzpumpe zum Erzeugen der ersten Umwälzrichtung in dem Kreisleitungssystem für die erste Kühlflüssigkeit als sogenannte Tandem-Pumpe gekoppelt, sodass ein einziger Antrieb für beide Umwälzpumpen ausreichend ist. Die Abwärme wird hierbei über den zweiten Wärmetauscher abgegeben.

Zu temperierende Fahrzeugkomponenten, welche nicht in dem Ölkreislauf oder dem Kühlsystem angeordnet sind, sind bevorzugt mittels eines Wasserkreislaufs temperierbar. Das Wasser ist oftmals ein Wasser-Glykol-Gemisch. Das Wasser des Wasserkreislaufs wird (mittels einer dritten Umwälzpumpe) in einer dritten Umwälzrichtung über einen dritten Wärmetauscher gefördert. Der dritte Wärmetauscher ist dabei bevorzugt zum Wärmeübertragen mit der Umgebung beziehungsweise der Umgebungsluft eingerichtet, wobei bevorzugt für eine (erzwungene) Konvektion an dem dritten Wärmetauscher ein Ventilator vorgesehen ist.

Es sei darauf hingewiesen, dass auch in dem Ölkreislauf und/oder dem Wasserkreislauf die jeweiligen Komponenten, beispielsweise bei winterlichen Temperaturen erwärmbar sind, wobei aber auch hier der Hauptzustand ein Abführen von Abwärme ist. Ebenfalls ist gegebenenfalls die jeweilige Umwälzrichtung umkehrbar.

In einer vorteilhaften Ausführungsform ist zum Temperieren ein Puls-Wechsel-Richter [PWR] für eine mittels des Kühlsystems mit der ersten Kühlflüssigkeit zu temperierende elektrische Traktionsmaschine in dem Wasserkreislauf angeordnet, also keine zu temperierende Komponente in dem Kühlsystem mit der ersten Kühlflüssigkeit. Es ist vorteilhaft, die Anzahl der Komponenten in dem besagten Kühlsystem für eine elektrische Traktionsmaschine gering zu halten. Bei einem Puls-Wechsel-Richter ist der Einsatz einer dielektrischen (ersten) Kühlflüssigkeit nicht notwendig. Es ist daher vorteilhaft, den Puls-Wechsel-Richter außerhalb des besagten Kühlsystems anzuordnen.

Es wird weiterhin in einer vorteilhaften Ausführungsform des Thermo-Managementmoduls vorgeschlagen, dass der Wasserkreislauf mit dem ersten Wärmetauscher des Kühlsystems für eine elektrische Traktionsmaschine zum Wärmeübertragen, bevorzugt als einziges flüssigkeitsgebundenes Wärmeübertragen des Kühlsystems zur Umgebung, verbunden ist,
wobei bevorzugt in der dritten Umwälzrichtung des Wasserkreislaufs ein Puls-Wechsel-Richter für eine elektrische Traktionsmaschine vor dem ersten Wärmetauscher angeordnet ist.

Hier ist vorgeschlagen, dass das Kühlsystem mit der ersten Kühlflüssigkeit und der Wasserkreislauf miteinander wärme-gekoppelt sind, also der Wasserkreislauf mittels des (ersten) Wärmetauschers zum Temperieren der ersten Kühlflüssigkeit eingerichtet ist. In dem ersten Wärmetauscher wird also, beispielsweise beim Kühlen der elektrischen Traktionsmaschine, (technisch ohne Flüssigkeitsaustausch) die Wärme aus der ersten Kühlflüssigkeit an das Wasser in dem Wasserkreislauf abgegeben.

In einer bevorzugten Ausführungsform ist keine weitere (erzwungene) Konvektion zum Temperieren der elektrischen Traktionsmaschine (und bevorzugt auch nicht weiterer Komponenten in dem Kühlsystem) und zum Abführen von Wärme aus der ersten Kühlflüssigkeit vorgesehen. Vielmehr ist dann der erste Wärmetauscher die einzige Einheit des Kühlsystems zum Wärmeübertragen, und zwar mit dem Wasserkreislauf.

In einer bevorzugten Ausführungsform ist der Puls-Wechsel-Richter in der (dritten) Umwälzrichtung des Wasserkreislaufs vor dem ersten Wärmetauscher angeordnet, sodass das Temperaturgefälle über dem Puls-Wechsel-Richter möglichst groß ist, während das Temperaturgefälle über dem ersten Wärmetauscher (aufgrund der meist sehr großen Wärmeleistung der elektrischen Traktionsmaschine) noch immer ausreichend ist.

In einer vorteilhaften Ausführungsform ist zum Umkehren der (ersten) Umwälzrichtung ein Umkehrventil vorgesehen. In einer Ausführungsform verläuft die erste Kühlflüssigkeit dann durch einen separaten Umkehrkanal. Bevorzugt wird die gleiche Leitung für beide Richtungen verwendet.

In der Hauptrichtung ist die Reihenfolge der Komponenten also (beginnend bei der ersten Umwälzpumpe):
1. die erste Umwälzpumpe;
2. der erste Wärmetauscher;
3. die elektrische Traktionsmaschine; und
4. der Ausgleichsbehälter.

Dabei ist innerhalb der Hauptrichtung der Bypass-Abschnitt gemäß der obigen Beschreibung bevorzugt derart angeordnet, dass dieser einen Leitungsabschnitt des Kreisleitungssystems von der ersten Umwälzpumpe mit einem Leitungsabschnitt vor dem Ausgleichsbehälter verbindet. Und in der Nebenrichtung ist die Reihenfolge der Komponenten also:
1'. die erste Umwälzpumpe;
2'. die elektrische Traktionsmaschine
3'. der erste Wärmetauscher; und
4'. der Ausgleichsbehälter.

Es sei darauf hingewiesen, dass mögliche weitere Komponenten in dem Kühlsystem ebenfalls umgekehrt beströmt werden oder nur einige oder ausschließlich die genannten drei Komponenten in der umgekehrten Reihenfolge beströmt werden.

Es wird weiterhin in einer vorteilhaften Ausführungsform des Thermo-Managementmoduls vorgeschlagen, dass der Wasserkreislauf zudem mit dem zweiten Wärmetauscher des Ölkreislaufs zum Wärmeübertragen, bevorzugt als einziges flüssigkeitsgebundenes Wärmeübertragen des Kühlsystems zur Umgebung, verbunden ist,
wobei bevorzugt in der dritten Umwälzrichtung des Wasserkreislaufs der erste Wärmetauscher vor dem zweiten Wärmetauscher angeordnet ist.

Hier ist vorgeschlagen, dass der Ölkreislauf und der Wasserkreislauf miteinander wärme-gekoppelt sind, also der Wasserkreislauf mittels des (zweiten) Wärmetauschers zum Temperieren des Öls eingerichtet ist. In dem zweiten Wärmetauscher wird also, beispielsweise beim Kühlen des Getriebes, (technisch ohne Flüssigkeitsaustausch) die Wärme aus dem Öl in dem Ölkreislauf an das Wasser in dem Wasserkreislauf abgegeben.

In einer bevorzugten Ausführungsform ist keine weitere (erzwungene) Konvektion zum Temperieren des Getriebes (und bevorzugt auch nicht weiterer Komponenten in dem Ölkreislauf) und zum Abführen von Wärme aus dem Öl vorgesehen. Vielmehr ist dann der zweite Wärmetauscher die einzige Einheit des Ölkreislaufs zum Wärmeübertragen, und zwar mit dem Wasserkreislauf.

In einer bevorzugten Ausführungsform ist der erste Wärmetauscher in der (dritten) Umwälzrichtung des Wasserkreislaufs vor dem zweiten Wärmetauscher angeordnet, sodass das Temperaturgefälle über dem ersten Wärmetauscher möglichst groß ist, während das Temperaturgefälle über dem zweiten Wärmetauscher (aufgrund des meist im Vergleich zu einer elektrischen Traktionsmaschine höheren zulässigen Temperaturniveaus in einem Getriebe) noch immer ausreichend ist.

Gemäß einem weiteren Aspekt wird ein Antriebsstrang für ein Kraftfahrzeug vorgeschlagen, aufweisend zumindest die folgenden Komponenten:
- zumindest eine elektrische Traktionsmaschine zum Bereitstellen eines Drehmoments;
- zumindest ein Vortriebsrad zum Vortrieb des betreffenden Kraftfahrzeugs mittels eines Drehmoments der elektrischen Traktionsmaschine;
- zumindest ein Getriebe zum Leiten eines Drehmoments zwischen der elektrischen Traktionsmaschine und zumindest einem der Vortriebsräder; und
- ein Kühlsystem nach einer Ausführungsform gemäß der obigen Beschreibung für zumindest eine der elektrischen Traktionsmaschinen und/oder ein Thermo-Management-Modul nach einer Ausführungsform gemäß der obigen Beschreibung für zumindest eine der elektrischen Traktionsmaschinen, zumindest eines der Getriebe und zumindest eine Fahrzeugkomponente, sowie bevorzugt einen Puls-Wechsel-Richter für zumindest eine der elektrischen Traktionsmaschinen.

Hier ist nun ein Antriebsstrang vorgeschlagen, welcher zumindest eine elektrische Traktionsmaschine umfasst, mittels welcher ein Drehmoment erzeugbar ist. Das Drehmoment der jeweiligen elektrischen Traktionsmaschine ist über ein Getriebe an zumindest ein Vortriebsrad übertragbar. Das zumindest eine Vortriebsrad ist zum Vortrieb des Kraftfahrzeugs eingerichtet. Das Temperieren der Komponenten des Antriebsstrangs wird von einem Kühlsystem oder einem Thermo-Management-Modul umfassend ein Kühlsystem nach einer Ausführungsform gemäß der obigen Beschreibung ausgeführt. Für den dritten Wärmetauscher wird bevorzugt die Luft der Umgebung genutzt, und zwar passiv mittels Fahrtwind und/oder aktiv mittels eines Ventilators.

Gemäß einem weiteren Aspekt wird ein Kraftfahrzeug vorgeschlagen, aufweisend ein Chassis mit einer Transportzelle und einen Antriebsstrang nach einer Ausführungsform gemäß der obigen Beschreibung zum Vortrieb des Kraftfahrzeugs.

Das Kraftfahrzeug ist zum Transport von zumindest einem Fahrgast und/oder Transportgütern vorgesehen und weist dazu eine Fahrgastzelle und/oder eine Cargo-Zelle auf. Das Kraftfahrzeug wird über das zumindest eine Vortriebsrad mittels des Drehmoments von zumindest einer der elektrischen Traktionsmaschinen angetrieben.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1: ein Thermo-Management-Modul in einem schematischen Schaltbild;
- Fig. 2: ein Ausgleichsbehälter in einer Explosionsdarstellung;
- Fig. 3: der Ausgleichsbehälter gemäß Fig. 2 in einer Ausbruchsansicht;
- Fig. 4: der Ausgleichsbehälter gemäß Fig. 2 und Fig. 3 in einer Schnittansicht;
- Fig. 5: eine Beruhigungsstrecke in einer Explosionsdarstellung; und
- Fig. 6: ein Kraftfahrzeug mit Thermo-Management-Modul in schematischer Draufsicht.

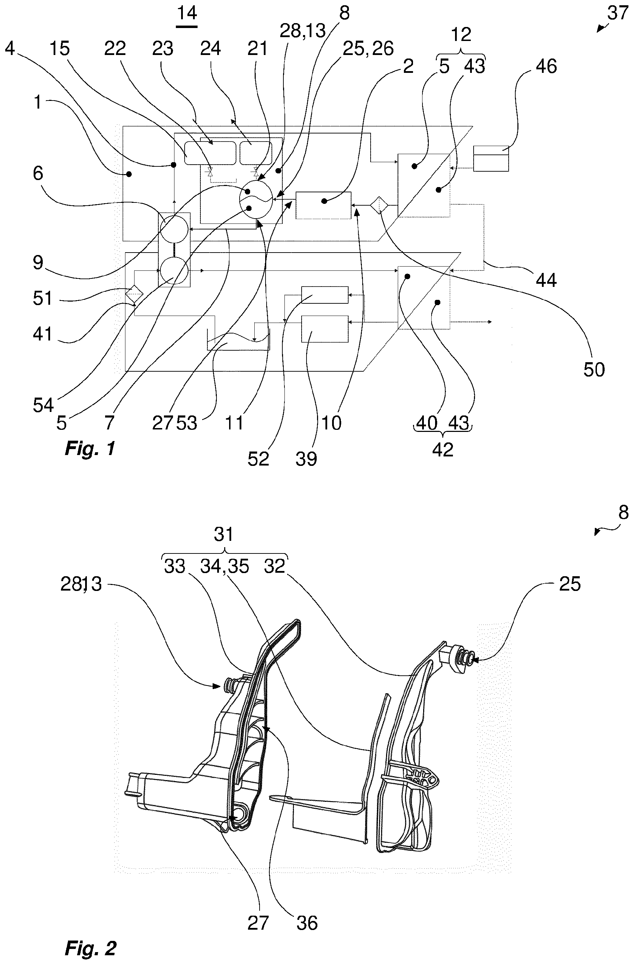

In Fig. 1 ist ein Thermo-Management-Modul **37** in einem schematischen Schaltbild gezeigt, welches ein Kühlsystem **1** für eine elektrische Traktionsmaschine **2** umfasst. Ein erster Wärmetauscher **12** des Kühlsystems **1** ist hier zum Wärmeübertragen mit einem Wasserkreislauf **43** (hier nur ausschnittsweise gezeigt) eingerichtet, sodass also die erste Kühlflüssigkeit **5** des Kreisleitungssystems **4** des Kühlsystems **1** und das Wasser (-Gemisch) des Wasserkreislaufs **43** miteinander im Wärmeaustausch stehen. Ein zweiter Wärmetauscher **42** eines Ölkreislaufs **40** für ein Getriebe **39** ist hier ebenfalls zum Wärmeübertragen mit dem Wasserkreislauf **43** (hier nur ausschnittsweise gezeigt) eingerichtet, sodass also das Öl des Ölkreislaufs **40** und das Wasser (-Gemisch) des Wasserkreislaufs **43** miteinander im Wärmeaustausch stehen.

In dem Wasserkreislauf **43** ist hier ein Puls-Wechsel-Richter **46** für die in dem Kühlsystem **1** zu temperierende elektrische Traktionsmaschine **2** angeordnet, und zwar in der (dritten) Umwälzrichtung **44** des Wasserkreislaufs **43** vor dem ersten Wärmetauscher **12** des Kühlsystems **1** mit der ersten Kühlflüssigkeit **5.** Zudem ist der zweite Wärmetauscher **42** in der dritten Umwälzrichtung **44** hinter dem ersten Wärmetauscher **12** angeordnet.

In dem Ölkreislauf **40** ist in der (zweiten) Umwälzrichtung **41** hinter dem zweiten Wärmetauscher **42** ein Getriebe **39** und eine Getriebekomponente **52** angeordnet, welche hier zueinander parallel geschaltet sind. Nachfolgend ist ein Ölsumpf **53,** daraufhin ein (zweiter) Grobfilter **51** und (darstellungsgemäß) zum Schluss eine zweite Umwälzpumpe **54** in dem Ölkreislauf **40** angeordnet. Die zweite Umwälzpumpe **54** ist hier (rein optional) als Tandempumpe mit einer ersten Umwälzpumpe **6** des Kühlsystems **1** mit der ersten Kühlflüssigkeit **5** ausgeführt.

Das Kühlsystem **1** umfasst ein Kreisleitungssystem **4,** in welchem in (erster) Umwälzrichtung **7** die folgenden Komponenten angeordnet sind:
1. die erste Umwälzpumpe **6**;
2. der erste Wärmetauscher **12**;
3. die elektrische Traktionsmaschine **2,** welche über einen Motoreingangsanschluss **10** und einen Motorausgangsanschluss **11** beströmt ist; und
4. einen Ausgleichsbehälter **8.**

Als optionaler Bestandteil ist hier noch der (erste) Grobfilter **50** vor dem Motoreingangsanschluss **10** dargestellt.

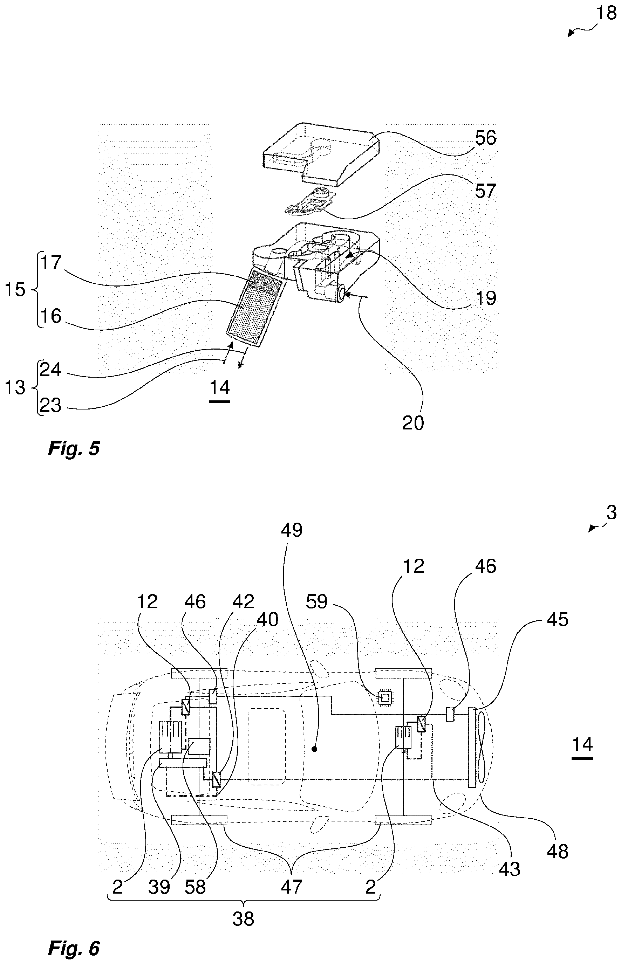

Der Ausgleichsbehälter **8** ist zu einem Teil mit der ersten Kühlflüssigkeit **5** und zum anderen Teil mit einem Gas **9** gefüllt und somit ein aus einem temperaturbedingten Volumenanstieg resultierender Druckanstieg mittels des komprimierbaren Gases **9** ausgleichbar oder zumindest abgemildert. Innerhalb des Ausgleichsbehälters **8** ist zudem ein Adsorptionsfilter **15** angeordnet. Darstellungsgemäß zwischen der Umgebung **14** ist zu dem Eingang **23** (mit dem Adsorptionsfilter **15**) sowie zu dem Ausgang **24** und dem Ausgleichsbehälter **8** jeweils, also zu dem Eingang **23** (mit dem Adsorptionsfilter **15**) sowie zu dem Ausgang **24** hin, ein Ventil **21,22** angeordnet. Dabei sind die Ventile **21,22** zum Verschließen einer Öffnung **13** zur Umgebung **14** des Ausgleichsbehälters **8** gegenüber der Umgebung **14** (hier als gestrichelte Pfeile dargestellt) eingerichtet. Ein Ausströmen von Gas **9** ist mittels eines ausströmseitigen Ventils **21** unterbindbar, beispielsweise druckgesteuert. Ein Einströmen von Gas **9** ist mittels eines einströmseitigen Ventils **22** unterbindbar, beispielsweise ebenfalls druckgesteuert. Mittels der Filterung des Adsorptionsfilters **15** ist sichergestellt, dass beispielsweise ein Austreten von Kohlenwasserstoff-Verbindungen aus dem Ausgleichsbehälter **8** und ein Eintreten von Feuchtigkeit aus der Umgebung **14** in den Ausgleichsbehälter **8** unterbunden beziehungsweise eine durchströmende Menge vernachlässigbar ist. Der Adsorptionsfilter **15** umfasst in einer vorteilhaften Ausführungsform Aktivkohle **17** und ein Trockenmittel **16** (vergleiche Fig. 5). Aufgrund der Verringerung der Anzahl und/oder Dauer von Zuständen, in welchen ein Gasaustauch mit der Umgebung **14** durchgeführt wird, mittels Verschließen der Ventile **21,22** ist eine Erhöhung der Lebensdauer des Adsorptionsfilters **15** erzielbar. Dafür sind die Ventile **21,22** bevorzugt normal geschlossen ausgeführt. Die Ventile **21,22** sind in einem bevorzugten Ausführungsbeispiel druckgesteuert und/oder temperaturgesteuert. Die Ventile **21,22** sind somit ausschließlich bei einem Druckgrenzwert und/oder einem Temperaturgrenzwert offen.

Es sei darauf hingewiesen, dass in der gezeigten Ausführungsform des Thermo-Management-Moduls **37** von dem Kühlsystem **1** und dem Ölkreislauf **40** kein Wärmetauscher zur Wärmeübertragung mit der Umgebung **14** vorgesehen ist. Vielmehr sind der erste Wärmetauscher **12** und der zweite Wärmetauscher **42** mit dem Wasserkreislauf **43** gekoppelt.

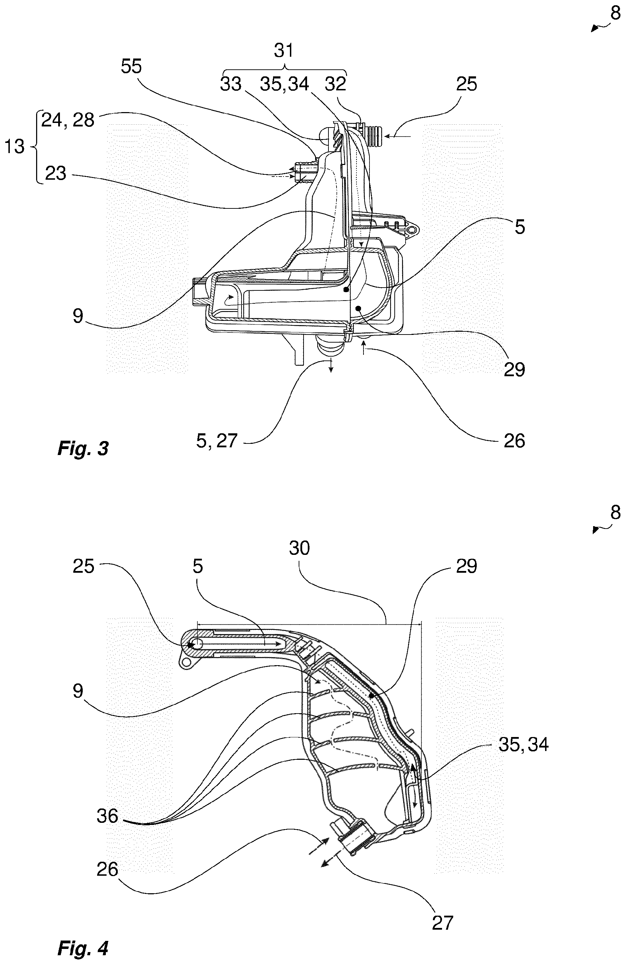

In Fig. 2 ist ein Ausgleichsbehälter **8** in einer Explosionsdarstellung gezeigt, wobei der Ausgleichsbehälter **8** ein erstes Behälter-Teil **32,** ein zweites Behälter-Teil **33** und ein drittes Behälter-Teil **34** umfasst. Das erste Behälter-Teil **32** umfasst dabei einen ersten Eintritt **25,** welcher zum Einleiten von einer ersten Kühlflüssigkeit **5** aus einem Kreisleitungssystem **4** (vergleiche Fig. 1) eingerichtet ist und (rein optional) einen zweiten Eintritt **26** (hier verdeckt, vergleiche dazu Fig. 3 und Fig. 4). Das zweite Behälter-Teil **33** bildet ein Labyrinth **36** aus und umfasst einen ersten Austritt **27** und einen zweiten Austritt **28,** wobei der zweite Austritt **28** für das Austreten von Gas **9** eingerichtet ist und als eine Öffnung **13** ausgeführt ist. Das dritte Behälter-Teil **34** bildet eine Trennwand **35** zwischen den anderen beiden Behälter-Teilen **32,33,** wobei die Trennwand **35** die erste Kühlflüssigkeit **5** daran hindert, von dem ersten Eintritt **25** direkt in das Volumen mit dem Labyrinth **36** des zweiten Behälter-Teils **33** zu dem zweiten Austritt **28** zu gelangen. Vielmehr ist mittels der Trennwand **35** eine Verlängerung des von der ersten Kühlflüssigkeit **5** zu durchströmenden Verbindungskanals **29** (vergleiche Fig. 3) innerhalb des Ausgleichsbehälters **8** geschaffen. Die drei Behälter-Teil **32,33,34** sind bevorzugt stoffschlüssig miteinander stoffschlüssig verbunden, beispielsweise mittels Schweißen oder Löten beziehungsweise Hartlöten. Die drei Behälter-Teile **32,33,34** bilden mit ihrer äußeren Fläche zusammen eine Wandung **31** des Ausgleichsbehälters **8** aus. Beispielsweise sind die Behälter-Teile **32,33,34** hier alle oder teilweise mittels Blechumformen gebildet, beispielsweise mittels Tiefziehen, oder alle oder teilweise mittels Spritzgießen urgeformt. Bei dieser Ausführungsform zeichnet sich die innere Form des Ausgleichsbehälters **8** an seiner von außen sichtbaren Form ab, weil die Wandstärke dünn ist, beispielsweise im Rahmen des technisch Machbaren fertigungsbedingt nahezu konstant ist.

Das hier von dem zweiten Behälter-Teil **33** gebildete Labyrinth **36** zeichnet sich vor allem dadurch aus, dass mittels der Mehrzahl von zueinander versetzten Durchlässen in dem Labyrinth **36** keine gerade Verbindung hin zu dem zweiten Austritt **28** (für Gas **9**) gebildet ist, sodass eventuell (beispielsweise durch eine Schwapp-Bewegung) hin zu dem zweiten Austritt **28** strömende erste Kühlflüssigkeit **5** von dem Labyrinth **36** zu einem Großteil zurückgehalten wird und zudem vom Gas **9** mitgerissene Kühlflüssigkeit **5** an einer entsprechenden Wandung **31** des Labyrinths **36** anhaftet und somit daran gehindert wird, hin zu dem zweiten Austritt **28** für Gas **9** zu fließen.

In Fig. 3 ist der Ausgleichsbehälter **8** gemäß Fig. 2 in einer Ausbruchsansicht gezeigt, wobei die drei Behälter-Teile **32,33,34** in dieser Ansicht miteinander dichtend verbunden sind und die Wandung **31** nach außen hin geschlossen ist. Darstellungsgemäß am rechten oberen Ende ist an dem erste Behälter-Teil **32** der erste Eintritt **25** angeordnet, welcher zum Einleiten der ersten Kühlflüssigkeit **5** eingerichtet ist. In diesem Ausführungsbeispiel ist zusätzlich noch der zweite Eintritt **26** an dem darstellungsgemäß unteren rechten Ende des Ausgleichsbehälters **8** angeordnet, wobei dieser zum Hineinleiten von der ersten Kühlflüssigkeit **5** eingerichtet ist. Die erste Kühlflüssigkeit **5** ist aufgrund der Trennwand **35** des dritten Behälter-Teils **34** daran gehindert, nach darstellungsgemäß links zu strömen und durchströmt somit zu einem Teil den Verbindungskanal **29.** Der Verbindungskanal **29** verläuft hier in die Bildebene hinein und weitet sich hin zu dem ersten Austritt **27** auf. Die Strömung der ersten Kühlflüssigkeit **5** ist mit dem Pfeil mit (wo nicht verdeckt mit durchgezogener und wo verdeckt mit gestrichelter Linie) angedeutet. Über den ersten Austritt **27** tritt die erste Kühlflüssigkeit **5**, möglichst von Gaseinschlüssen befreit, zur weiteren Förderung zurück in die weiteren Abschnitte eines Kreisleitungssystems **4** (vergleiche Fig. 1) ein. Weiterhin ist der zweite Austritt **28** vorgesehen, über welchen das Gas **9** austreten kann, wobei das Gas **9** (oder zumindest jenes Blasen-förmig vorliegendes Gas **9**) entlang des Verbindungskanals **29** infolge der Verlangsamung und Entspannung von der ersten Kühlflüssigkeit **5** zu einem Großteil separiert wird und zu dem höher gelegenen zweiten Austritt **28** strömt, darstellungsgemäß mit strichpunktierter Linie angedeutet. Dabei passiert das Gas **9** das Labyrinth **36** (hier verdeckt, vergleiche Fig. 4) innerhalb des zweiten Behälter-Teils **33** und tritt aus dem zweiten Austritt **28** aus.

In diesem Ausführungsbeispiel ist der zweite Austritt **28** (durch einen Ausbruch sichtbar gemacht) horizontal zweigeteilt ausgeführt, wobei rein optional ein Trennelement **55** den zweiten Austritt **28** (eine Öffnung **13** nach außen bildend) in einen Ausgang **24** und einen Eingang **23** für Gas **9** trennt. Ein Eintreten von Gas **9** (ist nötig, wenn aufgrund von einer Volumenabnahme der Druck innerhalb des Kreisleitungssystems **4** sonst übermäßig verringert würde. Es sei darauf hingewiesen, dass in einer bevorzugten Ausführungsform der Austritt mit einer Leitung oder einer Beruhigungsstrecke **18** (vergleiche Fig. 5) verbunden ist, welche die Öffnung **13** nach außen umfasst.

In Fig. 4 ist der Ausgleichsbehälter **8** gemäß Fig. 2 und Fig. 3 in einer Schnittansicht gezeigt. Hier werden nur noch Komponenten beschrieben, welche in der obigen Beschreibung nicht oder nur unzureichend sichtbar waren. Die Schnittansicht ist hier derart gewählt, dass das Labyrinth **36** sichtbar ist, welches von dem zweiten Behälter-Teil **33** gebildet ist. In diesem Ausführungsbeispiel ist das Labyrinth **36** derart ausgeführt, dass von außen über den zweiten Austritt **28** für Gas **9** (hier nicht dargestellt) eintretende Flüssigkeit (beispielsweise Spritzwasser oder erhöhte Luftfeuchtigkeit aus der Luft) aus der Umgebung **14** von der Wandung **31** des Labyrinths **36** zurückgehalten wird und nicht beziehungsweise nur in einer vernachlässigbaren Menge in die erste Kühlflüssigkeit **5** beigemischt wird. Das aus der ersten Kühlflüssigkeit **5** separierte Gas **9** (hier in einer strichpunktierten Linie ein möglicher Gasstrom **20** dargestellt) wird dabei beim Durchströmen hin zu dem zweiten Austritt **28** nicht oder nur zu einem sehr geringen Anteil von dem Labyrinth **36** gestört.

Von dem ersten Eintritt **25** bis zu dem darstellungsgemäß unteren Übergang der ersten Kühlflüssigkeit **5** in eine in der Darstellung Strömung aus der Bildebene hinaus (vergleiche Fig. 3), erstreckt sich ein horizontaler und/oder vertikaler Versatz **30**, wobei der Versatz bei der gezeigten Ausführungsform etwa den gleichen horizontalen Abstand zu dem Extremum der horizontalen Erstreckung des Verbindungskanals **29** aufweist wie der vertikale Abstand. Dadurch ist sichergestellt, dass von dem ersten Eintritt **25** für die erste Kühlflüssigkeit **5** stets der höchste Punkt gebildet ist, auch wenn aufgrund einer Überlagerung der Erdbeschleunigung durch die Fahrzeugbeschleunigung eine von dem geometrisch definierten Ausrichtung abweichende Gesamtbeschleunigung vorliegt. Damit ist eine Entgasungsstrecke innerhalb des Ausgleichsbehälters **8** maximiert und damit der Ausgleichsbehälter **8** besonders effizient zum Vermeiden von Gaseinschlüssen in der ersten Kühlflüssigkeit **5.** Daher ist am darstellungsgemäß unteren Ende des horizontale und/oder vertikalen Versatzes **30** der erste Austritt **27** für die erste Kühlflüssigkeit **5** angeordnet.

In Fig. 5 ist eine Beruhigungsstrecke **18** in einer Explosionsdarstellung gezeigt, wobei die Beruhigungsstrecke **18** rein optional einen Deckel **56**, einen Abscheider **57** und ein Beruhigungslabyrinth **19** umfasst. Das Beruhigungslabyrinth **19** ist mittels einer Öffnung **13** mit dem Ausgleichsbehälter **8** fluidisch kommunizierend verbunden, sodass ein Gasstrom **20** aus dem Ausgleichsbehälter **8** in die Beruhigungsstrecke **18** einströmen beziehungsweise ausströmen kann. Aus der Umgebung **14** einströmendes Gas **9** (beziehungsweise Luft) muss zunächst über einen Adsorptionsfilter **15** strömen, bevor es in die Beruhigungsstrecke **18** einströmen kann. Der Adsorptionsfilter **15** umfasst hier ein (rein optional Umgebungs-seitig angeordnetes) Trockenmittel **16** und (rein optional Behälter-seitig angeordnete) Aktivkohle **17.** Von dem Adsorptionsfilter **15** ist hier die äußerste Komponente in dem Gasstrom **20** gebildet. Bevorzugt ist die Öffnung **13** mittels eines Ventils, bevorzugt jeweils für den Eingang **23** und den Ausgang **24** ein separates Ventil **21,22** (vergleiche Fig. 1), zur Umgebung **14** verschließbar.

In diesem Ausführungsbeispiel ist das Beruhigungslabyrinth **19** derart ausgeführt, dass Flüssigkeit besonders bevorzugt Luftfeuchtigkeit aus der einströmenden Luft aus der Umgebung **14** mittels Kondensation abscheidbar ist. Bei dem gleichen oder einem alternativen Ausführungsbeispiel ist mittels der Beruhigungsstrecke **18** von innen ausweichende Kühlflüssigkeit **5** (gegebenenfalls auch als Form von in dem ausströmenden Gas **9** gelösten oder mitgetragenen Tröpfchen) mittels des Beruhigungslabyrinth **19** abscheidbar.

In Fig. 6 ist ein Kraftfahrzeug **3** mit Thermo-Management-Modul **37** in schematischer Draufsicht mit einem Antriebsstrang **38** gezeigt. Das Kraftfahrzeug **3** weist etwa mittig seines Chassis **48** eine Transportzelle **49**, beispielsweise eine Fahrgastzelle, auf und seitlich seines Chassis **48** vier Vortriebsräder **47** zum Vortrieb des Kraftfahrzeugs **3.** Vorne ist eine (hier rein optional koaxiale) elektrische Traktionsmaschine **2** und hinten eine weitere (hier rein optional achs-parallel angeordnete) elektrische Traktionsmaschine **2,** sowie hinten ein Getriebe **39** und ein Differential **58** umfasst, wobei bevorzugt das Differential **58** in den Ölkreislauf **40** eingebunden ist (hier nicht dargestellt). Sowohl für die vordere als auch für die hintere elektrische Traktionsmaschine **2** ist jeweils ein Puls-Wechsel-Richter **46** vorgesehen. Ein Wasserkreislauf **43** ist zum Temperieren der Puls-Wechsel-Richter **46** und der ersten Wärmetauscher **12** und des zweiten Wärmetauschers **42** eingerichtet, wobei die Wärme des Wasserkreislaufs **43** über einen dritten Wärmetauscher **45** (hier mit Ventilator dargestellt) an die Umgebung **14** abführbar ist. Die hinführende Leitung ist hier jeweils mit durchgezogener und die rückführende Leitung jeweils in strichpunktierter Linie dargestellt, sodass die (dritte) Umwälzrichtung **44** des Wasserkreislaufs **43** in der Darstellung gegen den Uhrzeigersinn verläuft. Ebenso ist dies bei dem Kühlsystem **1** an den elektrischen Traktionsmaschinen **2** und in dem Ölkreislauf **40** so dargestellt. Beispielsweise sind die Kühlsysteme **1**, der Ölkreislauf **40** und der Wasserkreislauf **43** wie (zumindest ausschnittsweise) in Fig. 2 dargestellt ausgeführt. Weiterhin ist hier ein Prozessor **59** angedeutet, mittels welchem die notwendige Steuerung und/oder Regelung von den gezeigten (und gegebenenfalls weiteren) Komponenten ausführbar ist. Der Prozessor **59** ist beispielsweise als CPU ausgeführt und/oder Teil eines Bordcomputers des Kraftfahrzeugs **3.**

Mit dem hier vorgeschlagenen Ausgleichsbehälter und Kühlsystem ist eine effiziente Entlüftung der Kühlflüssigkeit darstellbar.

### Bezugszeichenliste

| | | | |
|---|---|---|---|
| 1 | Kühlsystem | 31 | Wandungen |
| 2 | Traktionsmaschine | 32 | erstes Behälter-Teil |
| 3 | Kraftfahrzeug | 33 | zweites Behälter-Teil |
| 4 | Kreisleitungssystem | 34 | drittes Behälter-Teil |
| 5 | erste Kühlflüssigkeit | 35 | Trennwand |
| 6 | erste Umwälzpumpe | 36 | Labyrinth |
| 7 | erste Umwälzrichtung | 37 | Thermo-Management-Modul |
| 8 | Ausgleichsbehälter | 38 | Antriebsstrang |
| 9 | Gas | 39 | Getriebe |
| 10 | Motoreingangsanschluss | 40 | Ölkreislauf |
| 11 | Motorausgangsanschluss | 41 | zweite Umwälzrichtung |
| 12 | erster Wärmetauscher | 42 | zweiter Wärmetauscher |
| 13 | Öffnung | 43 | Wasserkreislauf |
| 14 | Umgebung | 44 | dritte Umwälzrichtung |
| 15 | Adsorptionsfilter | 45 | dritter Wärmetauscher |
| 16 | Trockenmittel | 46 | Puls-Wechsel-Richter |
| 17 | Aktivkohle | 47 | Vortriebsrad |
| 18 | Beruhigungsstrecke | 48 | Chassis |
| 19 | Beruhigungslabyrinth | 49 | Transportzelle |
| 20 | Gasstrom | 50 | erster Grobfilter |
| 21 | ausströmseitiges Ventil | 51 | zweiter Grobfilter |
| 22 | einströmseitiges Ventil | 52 | Getriebekomponente |
| 23 | Eingang | 53 | Ölsumpf |
| 24 | Ausgang | 54 | zweite Umwälzpumpe |
| 25 | erster Eintritt | 55 | Trennelement |
| 26 | zweiter Eintritt | 56 | Deckel |
| 27 | erster Austritt | 57 | Abscheider |
| 28 | zweiter Austritt | 58 | Differential |
| 29 | Verbindungskanal | 59 | Prozessor |
| 30 | Versatz | | |

## Patentansprüche

1. Kühlsystem (1) für eine elektrische Traktionsmaschine (2) für ein Kraftfahrzeug (3), aufweisend zumindest die folgenden Komponenten:
- ein Kreisleitungssystem (4) zum Leiten von einer umzuwälzenden ersten Kühlflüssigkeit (5);
- eine Umwälzpumpe (6) zum Fördern von der ersten Kühlflüssigkeit (5) in dem Kreisleitungssystem (4) in einer ersten Umwälzrichtung (7);
- einen Ausgleichsbehälter (8), welcher mindestens teilweise mit der im Kreisleitungssystem (4) umzuwälzenden ersten Kühlflüssigkeit (5) und mindestens teilweise mit einem Gas (9) gefüllt ist;
- einen Motoreingangsanschluss (10) zum eingangsseitigen fluidischen Verbinden des Kreisleitungssystems (4) mit einer zu temperierenden elektrischen Traktionsmaschine (2);
- einen Motorausgangsanschluss (11) zum ausgangsseitigen fluidischen Verbinden des Kreisleitungssystems (4) mit der zu temperierenden elektrischen Traktionsmaschine (2); und
- einen ersten Wärmetauscher (12) zum Wärme Abführen aus der und/oder Zuführen in die in dem Kreisleitungssystem (4) umzuwälzende erste Kühlflüssigkeit (5),
**dadurch gekennzeichnet, dass**
der Ausgleichsbehälter (8) mit einer Öffnung (13) zu der Umgebung (14) offen ausgeführt ist.

2. Kühlsystem (1) nach Anspruch 1, wobei
von der Öffnung (13) zu der Umgebung (14) des Ausgleichsbehälters (8) zum Filtern von passierender Luft ein Adsorptionsfilter (15) umfasst ist,
wobei der Adsorptionsfilter (15) ein Trockenmittel (16) und/oder Aktivkohle (17) umfasst.

3. Kühlsystem (1) nach Anspruch 1 oder Anspruch 2, wobei die Öffnung (13) des Ausgleichsbehälters (8) über eine Beruhigungsstrecke (18) mit der Umgebung (14) kommunizierend verbunden ist,
wobei bevorzugt mittels der Beruhigungsstrecke (18) über ein Beruhigungslabyrinth (19) Flüssigkeit aus einem die Beruhigungsstrecke (18) passierenden Gasstrom (20) abscheidbar ist, und/oder wobei bevorzugt mittels der Beruhigungsstrecke (18) ein im Vergleich zu dem Druck in der Öffnung (13) des Ausgleichsbehälters (8) erhöhter Druck in einem die Beruhigungsstrecke (18) passierenden Gasstrom (20) erzeugbar ist.

4. Kühlsystem (1) nach einem von Anspruch 1 bis Anspruch 3, wobei mittels zumindest eines Ventils (21,22) die Öffnung (13) des Ausgleichsbehälters (8) zur Umgebung (14) verschließbar ist,
wobei bevorzugt das zumindest eine Ventil (21,22) normal geschlossen ist, und besonders bevorzugt druckgesteuert öffenbar ist, und/oder wobei bevorzugt zumindest eines der Ventile (21,22), besonders bevorzugt auf einen Druckgrenzwert und/oder einen Temperaturgrenzwert hin, schaltbar verschließbar ist.

5. Kühlsystem (1) nach einem von Anspruch 1 bis Anspruch 4, wobei die Öffnung (13) des Ausgleichsbehälters (8) über einen Eingang (23) und einen Ausgang (24) mit der Umgebung (14) kommunizierend verbunden ist, wobei der Ausgang (24) zum Filtern von Luft einzig über eine semipermeable Membran mit der Umgebung (14) in gasdurchlässiger und in Schmutz und/oder Flüssigkeit abweisender Verbindung steht.

6. Kühlsystem (1), aufweisend einen Ausgleichsbehälter (8) mit zumindest den folgenden Komponenten:
- zumindest einen Eintritt (25,26) für eine erste Kühlflüssigkeit (5);
- einen ersten Austritt (27) für die erste Kühlflüssigkeit (5);
- einen zweiten Austritt (28) für ein Gas (9); und
- einen Verbindungskanal (29) zwischen dem zumindest einen Eintritt (25,26) und den Austritten (27,28),
wobei der Verbindungskanal (29) ausgehend von dem zumindest einen Eintritt (25,26) hin zu dem ersten Austritt (27) für die erste Kühlflüssigkeit (5) sich aufweitend gebildet ist,
wobei einer der Eintritte (25) für die erste Kühlflüssigkeit (5) und der zweite Austritt (28) für ein Gas (9) in der Einbausituation in jedem Betriebszustand mittels eines horizontalen Versatzes (30) oberhalb des ersten Austritts (27) für die erste Kühlflüssigkeit (5) angeordnet ist.

7. Kühlsystem (1) nach Anspruch 6, wobei
die Wandungen (31) des Ausgleichsbehälters (8) gebildet sind von:
- einem ersten Behälter-Teil (32), welches den Eintritt (25,26) für die erste Kühlflüssigkeit (5) umfasst;
- einem zweiten Behälter-Teil (33), welches die Austritte (27,28) umfasst; und
- einem dritten Behälter-Teil (34), von welchem eine Trennwand (35) zwischen dem ersten Behälter-Teil (32) und dem zweiten Behälter-Teil (33) gebildet ist, wobei der Eintritt (25,26) und der zweite Austritt (28) einzig über eine längste Erstreckung des Ausgleichsbehälters (8) miteinander kommunizierend verbunden sind.

8. Kühlsystem (1) nach Anspruch 6 oder Anspruch 7, wobei in dem Verbindungskanal (29) zwischen dem ersten Austritt (27) für die erste Kühlflüssigkeit (5) und dem zweiten Austritt (28) für ein Gas (9) ein Labyrinth (36) zum Zurückhalten von Flüssigkeit gebildet ist.

9. Thermo-Management-Modul (37) für einen Antriebsstrang (38) eines Kraftfahrzeugs (3), aufweisend zumindest die folgenden Komponenten:
- für ein Getriebe (39), einen Ölkreislauf (40) mit einer zweiten Umwälzrichtung (41) und mit einem zweiten Wärmetauscher (42);
- für zumindest eine Fahrzeugkomponente, einen Wasserkreislauf (43) mit einer dritten Umwälzrichtung (44) und mit einem dritten Wärmetauscher (45); und
- für eine elektrische Traktionsmaschine (2), ein Kühlsystem (1) nach einem von Anspruch 1 bis Anspruch 8,
wobei bevorzugt ein Puls-Wechsel-Richter (46) für die elektrische Traktionsmaschine (2) in dem Wasserkreislauf (43) angeordnet ist.

10. Thermo-Management-Modul (37) nach Anspruch 9, wobei der Wasserkreislauf (43) mit dem ersten Wärmetauscher (12) des Kühlsystems (1) für eine elektrische Traktionsmaschine (2) zum Wärmeübertragen, bevorzugt als einziges flüssigkeitsgebundenes Wärmeübertragen des Kühlsystems (1) zur Umgebung (14), verbunden ist, wobei bevorzugt in der dritten Umwälzrichtung (44) des Wasserkreislaufs (43) ein Puls-Wechsel-Richter (46) für eine elektrische Traktionsmaschine (2) vor dem ersten Wärmetauscher (12) angeordnet ist.
